# EUROPEAN PATENT SPECIFICATION

(11) **EP 3 171 963 B1**
(45) Date of publication and mention of the grant of the patent: **30.08.2023**
(21) Application number: 15752935.5
(22) Date of filing: 23.07.2015
(51) Int. Cl.: B01D 47/10, F01N 3/00

(54) **PROCESS AND PLANT FOR THE MODIFICATION OF THE SURFACE CHARGE**
VERFAHREN UND ANLAGE ZUR MODIFIZIERUNG DER OBERFLÄCHENLADUNG
PROCÉDÉ ET INSTALLATION DE MODIFICATION DE CHARGE DE SURFACE

(30) Priority: 25.07.2014 IT MI20141356
(43) Date of publication of application: 31.05.2017
(73) Proprietor: Vomm Impianti e Processi S.P.A., 20089 Rozzano (MI) (IT)
(72) Inventor: CEREA, Giuseppina, I-20089 Rozzano (Milano) (IT)
(74) Representative: Botti & Ferrari S.p.A.
(86) International application number: PCT/EP2015/066848
(87) International publication number: WO 2016/012532

(56) References cited:
- EP-A1- 0 749 772
- EP-A1- 0 749 772
- WO-A1-00/30733
- WO-A1-00/56844
- US-A- 3 209 519
- US-A- 3 615 165
- US-A- 4 938 787
- US-B1- 6 391 100

## Description

### Field of application

The present invention relates to a process for the modification of the surface charge and the abatement of particulate matter produced by the combustion of organic matter, such as sludges, biomass, refuse, fuels from anaerobic digestion and solid fuels.

### Prior art

Particulate matter (PM) is formed by a set of very small (solid or liquid) particles which are dispersed in the atmosphere. The particles are classified on the basis of their characteristic dimensions: the fine dusts, also called PM₁₀, include all the particles with dimensions as small as 10 micrometres diameter, and the PM_{2.5} comprises all the particles with a diameter of up to 2.5 micrometres. There is also the ultrafine particulate matter (UFP), with a diameter < 0.1 pm, formed mainly by combustion residues (PM_{0.1}).

Reference is made to "primary" particulate matter when the particles are emitted directly into the atmosphere by sources such as vehicles, industrial plants, building sites and the combustion of organic materials.

"Secondary" particles instead originate from processes for the chemical conversion and condensation of primary gaseous substances and consist mainly of sulphates and nitrates, derived from the reactions of sulphur dioxide and nitrogen oxide conversion products with ammonia and from organic substances (so-called "secondary organic component").

In general, the "coarse" fraction of the PM₁₀, i.e. with a size of between 2.5 and 10 micrometres, is composed mainly of primary particles, while the PM_{2.5} contains in particular secondary particles.

The combustion processes generate particles formed by a carbonaceous core, on the surface of which various uncombusted substances or hightemperature reaction products are adsorbed. These include sulphates, nitrates, metals, organic compounds such as hydrocarbons, and their derivatives. The dimensions of these particles vary within a wide range of dimensions, from a few thousandths to a few tens of micrometres. As regards motor-vehicle emissions, the particulate matter in diesel-engine emissions consists mainly of elementary carbon in which organic substances and traces of metal compounds are adsorbed, while the particulate matter emitted from petrol engines consists mainly of inorganic compounds, including metal compounds, and a small organic fraction.

In view of their small dimensions, the fine dusts - in particular the finer components - may penetrate into the more delicate parts of the lungs, i.e. the alveoli, and reach partly the lymphatic and blood vessels.

The continuous infiltration of foreign matter into the alveoli may damage the layer of cells responsible for the gaseous exchanges (the intake of oxygen and the expulsion of carbon dioxide) and cause respiratory problems. Moreover, these particles are toxic and/or cancerogenous and may give rise to serious illnesses over time.

The dangerous nature of PM₁₀, and in particular PM_{2.5}, has been demonstrated by numerous epidemiological studies. PM_{2.5} is in fact a complex mixture of thousands of chemical compounds and some of these are extremely toxic. In particular these toxic compounds consist of polycyclic aromatic hydrocarbons, the cancerogenous nature of which has been duly proven.

The harmful effects of PM₁₀ and PM_{2.5} are proportional to the concentration and (as has already been declared by the World Health Organization) it is not possible to determine a value below which PM₁₀ or PM_{2.5} are no longer a health risk. The effects may be acute on those days where the concentration of pollutants is higher, e.g. acute respiratory infections, asthma attacks, blood circulation problems and ischemia, worsening of respiratory and heart problems in persons prone to such conditions. Other chronic effects are due to the presence of the pollutants in the air over a long period of time: persistent cough and catarrh, chronic bronchitis or diminished lung capacity.

It would therefore be desirable to reduce to the lowest possible level the emissions of particulate matter and in particular PM₁₀, PM_{2.5} and PM_{0.1} in connection with processes which involve the combustion of organic matter.

In the present description below specific reference will be made to a process for the modification of the surface charge and the abatement of particulate matter resulting from processes for combustion of sludges, biomass, refuse, fuels from anaerobic digestion and solid fuels used in connection with plants for the generation of electric and/or thermal energy from such organic materials, but this process may also be applied to the abatement of particulate matter from any type of combustion process.

In connection with the processes for combustion of sludges and biomass mentioned above means for reducing the particulate matter introduced into the atmosphere, such as cyclones, scrubbers, bag filters and electrostatic precipitators, are at present used.

However, the efficiency of these particulate matter abatement means is not entirely satisfactory as regards the reduction in the levels of PM₁₀, PM_{2.5} and PM_{0.1} emitted.

These conventional technologies do not take into account the hydrophobic and electrostatic properties since the particles are charged in equal polarity conditions and therefore repel each other.

WO 00/30733 A1 discloses a method for the treatment of combustion effluent containing nitrogen oxide, in which the combustion effluent is treated with a liquid treatment additive composition comprising urea, water and an oxygenated organic compound, in the presence of a catalyst. In particular, such additive composition can comprise 30-70% b.w. of water, 20-40% b.w. of urea and 1-40 b.w. of an oxygenated organic compound, which may be, i.a., propylene glycol.

This method is aimed at reducing NO₂ emissions and not particulate emissions and is based on the use of urea and a catalyst, while the use of the oxygenated organic compound, as it appears from Example 3, is optional.

WO 00/30733 A1 does not disclose any apparatus suitable for carrying out the method therein described.

US 3 209 519 A relates to the dehydration of moisture-laden natural gas by absorption of water vapors with a liquid absorbent. Among the liquid absorbers, diethylene glycol and triethylene glycol solutions containing up to 2% water can be used.

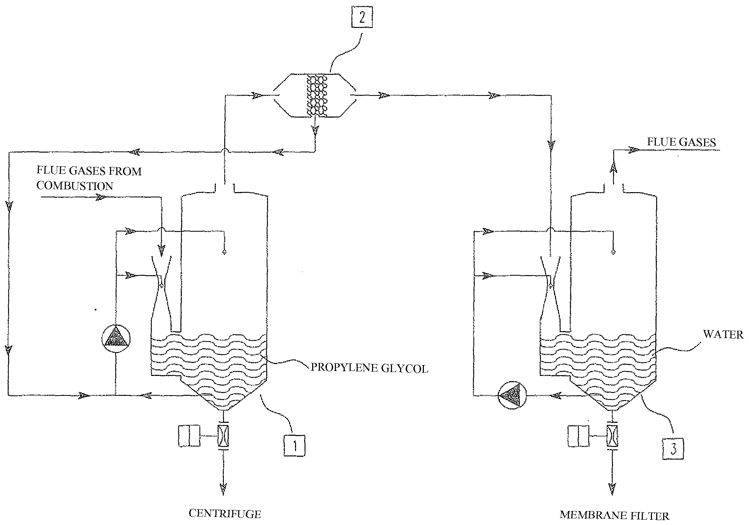

US 6 391 100 B1 discloses a gas scrubber for removing particulate and undesired gases from a gas stream, which comprises a container 110 (Figure 1) suitable for bringing a gas stream into intimate contact with a fluid 113, which may be water or may include propylene glycol. This document does not disclose a reactor suitable for bringing the gas exiting the above-mentioned container into intimate contact with water.

WO 00/56844 A1 discloses a method and apparatus for the drying of natural gas, in which natural gas containing water is fed to a turbulent contactor 11 (Fig. 1), which may be a Venturi, into which triethylene glycol is also fed, in order to absorb the water contained in the gas, which is then conveyed to a gas/liquid separator. A reactor suitable for bringing the gas exiting the above-mentioned contactor into intimate contact with water is not disclosed.

US 4 938 787 A discloses a filter apparatus for filtering dust or foreign particles from a gas, comprising: a housing having an inlet opening and an outlet opening; and a plurality of filter devices contained in said housing, said filter devices disposed between the inlet opening and the outlet opening and transversely with respect to the direction of flow of the gas to be filtered, and each of said filter devices disposed in succession and at a spacing from each other, each of said filter devices comprising a substrate upon which is deposited a filter liquid which wets said substrate, each of said substrates including a plurality of holes, wherein the holes of the substrates of adjacent filter devices are displaced relative to each other. The liquid used in this filter apparatus is glycerine or a glycol.

In this filter apparatus, the exhaust gas is not transferred to a further device or reactor, in which the exhaust gas is scrubber with water.

### Summary of the invention

One object of the present invention is therefore to provide a process for the modification of the surface charge and the abatement of the particulate matter contained in flue gases emitted during combustion processes. Such a process is disclosed in appended claims 1 and 2.

According to one aspect thereof, the present invention relates to a plant as disclosed in appended claim 3.

It has been surprisingly found that the use of a water-miscible liquid polyol or a mixture of said polyol with water and in particular of propylene glycol or a propylene glycol/water mixture, in particular a propylene glycol mixture containing not more than 60% by weight of water, as washing liquid inside the scrubber through which flue gases produced by combustion processes are passed, results in the near total abatement of the particulate matter, with substantial zeroing of the PM₁₀ and PM_{2.5} values and significant reduction of the PM_{0.1} of the flue gases exiting from this scrubber.

The subsequent passage through a second scrubber, which uses water as washing liquid, allows abatement of the propylene glycol or other water-miscible liquid polyol present in aerosolized form in the flue gases exiting the first scrubber and cooling of the flue gases before they are discharged into the atmosphere.

The passage through a demister of the flue gases exiting the first scrubber has the function of achieving initial abatement of the propylene glycol or other polyol mist conveyed by the flue gases before they are fed to the second scrubber.

Without adhering to any particular theory, it may be assumed that the surprising abatement of the particulate matter obtained using a water-miscible liquid polyol, in particular propylene glycol, or a mixture thereof with water as washing liquid inside the first scrubber may be attributable to the affinity of the polyol, in particular propylene glycol, with the lipophilic organic compounds (e.g. the polycyclic aromatic hydrocarbons) adsorbed on the carbonaceous particles which form the particulate produced by the combustion processes. Since the liquid polyol, for example the polypropylene glycol, is also water-soluble, the subsequent passage of the flue gases which exit the first scrubber and convey the mist of propylene glycol or other water-miscible liquid polyol through the second water scrubber allows abatement of the propylene glycol (or other water-miscible liquid polyol) which is aerosolized before the flue gases are discharged into the atmosphere.

With reference to the water-miscible liquid polyol which is particularly preferred for the purposes of the present invention, namely propylene glycol, it should be said that this compound has a boiling point (188.2°C) sufficiently high to be used in total safety for the treatment of flue gases. The flue gases treated at the inlet of the scrubber using propylene glycol must have a temperature lower than the boiling temperature of the latter. Moreover, propylene glycol is a substance which is perfectly safe from a toxicological point of view since it is characterized by the absolute absence of cancerogenous and genotoxic effects.

It is in fact currently used in the pharmaceutical, food and cosmetics industries (the Cosmetic Ingredient Review (CIR) Panel considers propylene glycol to be safe for cosmetic use in a concentration of up to 50%).

The process according to the present invention therefore allows the removal of the particulate present in the flue gases derived from combustion processes in totally safe conditions for the operating staff, while fully respecting the environment.

The present invention will be further described with reference to an embodiment thereof, provided purely by way of a non-limiting example, with reference also to the attached drawing.

### Brief description of the drawings

Figure 1 shows in an entirely schematic form a plant for realizing a mode of implementation of the process according to the present invention.
Figure 2 shows a schematic cross-section of a scrubber which may be used in the process according to the present invention.

### Detailed description of a preferred embodiment

Figure 1 shows in schematic form a plant for implementing the process according to the present invention, which comprises a reactor 1, typically consisting of a scrubber, a demister 2 and a further reactor 3, also typically consisting of a scrubber.

With reference to this figure, the process according to the present invention envisages the feeding of flue gases produced by a combustion process to the reactor 1. Inside the reactor 1 the flue gases come into intimate contact with a liquid flow consisting of a water-miscible polyol, in particular a glycol and preferably propylene glycol or a mixture of this polyol with water, preferably a propylene glycol/water mixture, which extracts from these flue gases the solid particles contained therein. The liquid flow exiting the reactor 1 is conveyed away to a purification stage (by means of filtration or centrifuging) and, once purified, may be fed back to the reactor 1.

The flue gases exiting from the reactor 1 are fed to a demister 2 which may be, for example, of the grille or metal pad type, in order to pull down the polyol, in particular propylene glycol, which is entrained in aerosol form by the flue gases exiting the reactor 1.

The flue gases exiting the demister 2 are then fed to the further reactor 3 where they come into contact with a water flow, which extracts from the flue gases the residual droplets of polyol, for example propylene glycol, which have not been eliminated inside the demister 2. The reactor 3 therefore discharges a water flow containing, in dissolved form, the aforementioned polyol, for example propylene glycol, not eliminated inside the demister 2 and a flow of flue gases substantially devoid of particulate matter at a temperature which is suitable for direct discharging into the atmosphere.

The water discharged from the reactor 3 is conveyed to suitable stages for purification (by means of membrane filters), so as to free it from the polyol, for example propylene glycol, and residual particulate matter.

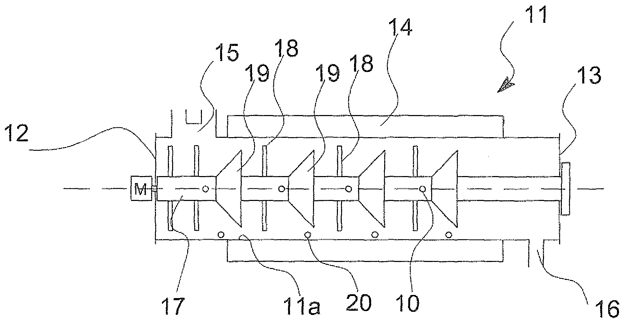

The reactors 1 and 3, as stated above, are typically scrubbers and may be conventional Venturi scrubbers or inertial scrubbers or scrubbers such as the one described in patent application EP 0 749 772 which has been illustrated schematically in Figure 2. Said scrubber comprises:
- a tubular body 11 with a cylindrical inner wall, which is provided with a cooling jacket 14 and is closed at the opposite extremities by end plates 12, 13 and is provided with an inlet aperture 15 for the admission of flue gases and with at least one discharge aperture 16;
- a coaxial shaft 17 extending longitudinally and supported rotatably inside the tubular body 11;
- at least one group of blades 18 fixed radially on said shaft 17;
- at least one rotating body 19 with a purely conical shape fixed on said shaft 17 coaxially therewith, the base of which body faces the discharge aperture and has a diameter almost equal to the diameter of the inner wall of the cylindrical tubular body 11, with which it forms an annular passage;
- means 10 for the admission of liquid into the tubular body 11 upstream of said at least one rotating body with a purely conical shape, and
- optionally one or more nozzles 20 on the inner wall of the cylindrical tubular body 11, for the spray admission of a liquid.

With use of such apparatus, the process according to the present invention has been applied, in the example shown hereinbelow, to the flue gases of a plant for the production of electric energy by means of combustion of biomass.

### EXAMPLE

The flue gases of a plant for the production of electric energy by means of the combustion of biomass (ligneous material/agricultural and industrial waste) were continuously fed to a Venturi scrubber 1 in which propylene glycol was used as washing liquid.

A flow of flue gases, which had undergone washing with propylene glycol, and a flow of propylene glycol, was discharged continuously from the scrubber 1. The flue gases output from the scrubber 1 were fed continuously into a demister 2 of the grille type for elimination of most of the propylene glycol entrained by the flue gases in aerosol form.

A flow of flue gases and a flow of propylene glycol were discharged continuously from the demister. The propylene glycol was combined again with that discharged from the scrubber 1 and conveyed to a centrifuging purification stage.

The flue gases exiting the demister were fed to a Venturi scrubber 3 in which water was used as washing liquid.

A flow of water containing the residual propylene glycol not eliminated by the demister and a flow of flue gases substantially free from particulate matter were discharged continuously from the scrubber 3.

In particular, determination of the PM₁₀ in these flue gases provided a value <0.2 µg/m³ and determination of the PM_{2.5} provided a value of <0.1 µg/m³ (PM_{0.1} < 0.05 µg/m³).

The water discharged from the scrubber 3 was conveyed to a membrane filter for purification of the water.

## Claims

1. A process for the modification of the surface charge and the abatement of particulate matter contained in flue gases emitted during combustion processes, which comprises a passage of said flue gases through a reactor (1), in which said gases are brought into intimate contact with a water-miscible liquid polyol or with a mixture of said polyol with water, a passage of said flue gases exiting said reactor (1) through a demister (2) and subsequently through a further reactor (3), in which said flue gases are brought into intimate contact with water, wherein each one of said reactor (1) and said further reactor (3) is a Venturi scrubber or an inertial scrubber.

2. The process according to claim 1, wherein said water-miscible liquid polyol is a glycol, preferably propylene glycol.

3. A plant for the abatement of particulate matter contained in flue gases emitted during combustion processes, comprising a reactor (1) suitable for bringing said flue gases into intimate contact with a water-miscible liquid polyol or a mixture of said polyol with water, a further reactor (3) suitable for bringing the flue gases exiting said reactor (1) into intimate contact with water, and a demister (2) arranged between said reactor (1) and said further reactor (3), wherein said reactor (1) and said further reactor (3) consist of scrubbers, **characterized in that** said scrubbers consist of Venturi scrubbers or inertial scrubbers or a scrubber comprising:
- a tubular body (11), having a cylindrical inner wall (11a), which tubular body is provided with a cooling jacket (14) and is closed at its opposite extremities by end plates (12, 13) and is provided with at least one inlet aperture (15) for the admission of flue gases and with at least one discharge aperture (16),
- a coaxial shaft (17) extending longitudinally and supported rotatably inside the tubular body (11),
- at least one group of blades (18) fixed radially on said shaft (17),
- at least one rotating body (19) with a purely conical shape fixed on said shaft (17) coaxially therewith, the base of which body faces the discharge aperture and has a diameter almost equal to the diameter of the inner wall of the cylindrical tubular body (11), with which it forms an annular passage,
- means (10) for the admission of liquid into the tubular body (11) upstream of the at least one rotating body (19) with a purely conical shape, and
- optionally one or more nozzles (20) on the inner wall of the cylindrical tubular body (11), for the spray admission of a liquid.

## Patentansprüche

1. Verfahren zur Modifizierung der Oberflächenladung und zur Verringerung von Feinstaub, der in während Verbrennungsprozessen emittierten Rauchgasen enthalten ist, welches einen Durchgang der Rauchgase durch einen Reaktor (1) umfasst, in dem die Gase in engen Kontakt mit einem wassermischbaren flüssigen Polyol oder mit einem Gemisch aus dem Polyol und Wasser gebracht werden, einen Durchgang der den Reaktor (1) verlassenden Rauchgase durch einen Demister (2) und anschließend durch einen weiteren Reaktor (3), in dem die Rauchgase in engen Kontakt mit Wasser gebracht werden, wobei sowohl der Reaktor (1) als auch der weitere Reaktor (3) ein Venturiwäscher oder ein Trägheitswäscher ist.

2. Verfahren nach Anspruch 1, wobei das wassermischbare flüssige Polyol ein Glykol, vorzugsweise Propylenglykol, ist.

3. Anlage zur Verringerung von Feinstaub, der in während Verbrennungsprozessen emittierten Rauchgasen enthalten ist, umfassend einen Reaktor (1), der geeignet ist, die Rauchgase in engen Kontakt mit einem wassermischbaren flüssigen Polyol oder einem Gemisch aus dem Polyol und Wasser zu bringen, einen weiteren Reaktor (3), der geeignet ist, die aus dem Reaktor (1) austretenden Rauchgase in engen Kontakt mit Wasser zu bringen, und einem Demister (2), der zwischen dem Reaktor (1) und dem weiteren Reaktor (3) angeordnet ist, wobei der Reaktor (1) und der weitere Reaktor (3) aus Wäschern bestehen, **dadurch gekennzeichnet, dass** die Wäscher bestehen aus Venturiwäschern oder Trägheitswäschern oder einem Wäscher umfassend:
- einen rohrförmigen Körper (11) mit einer zylindrischen Innenwand (11a), wobei der rohrförmige Körper mit einem Kühlmantel (14) versehen ist und an seinen gegenüberliegenden Enden durch Endplatten (12, 13) verschlossen ist und mit mindestens einer Einlassöffnung (15) für den Einlass von Rauchgasen und mit mindestens einer Auslassöffnung (16) versehen ist,
- eine koaxiale Welle (17), die sich in Längsrichtung erstreckt und im Inneren des rohrförmigen Körpers (11) drehbar gelagert ist,
- mindestens eine Gruppe von Schaufeln (18), die radial an der Welle (17) befestigt sind,
- mindestens einen rotierenden Körper (19) mit einer rein konischen Form, der auf der Welle (17) koaxial zu dieser befestigt ist, wobei die Basis dieses Körpers der Auslassöffnung zugewandt ist und einen Durchmesser aufweist, der fast gleich dem Durchmesser der Innenwand des zylindrischen rohrförmigen Körpers (11) ist, mit dem er einen ringförmigen Durchgang bildet,
- Mittel (10) für den Einlass von Flüssigkeit in den rohrförmigen Körper (11) stromaufwärts von dem mindestens einen rotierenden Körper (19) mit einer rein konischen Form, und
- optional eine oder mehrere Düsen (20) an der Innenwand des zylindrischen rohrförmigen Körpers (11) für den Sprüheinlass einer Flüssigkeit.

## Revendications

1. Procédé de modification de la charge superficielle et de réduction des matières particulaires contenues dans des gaz de combustion émis lors de processus de combustion, qui comprend un passage desdits gaz de combustion dans un réacteur (1), dans lequel lesdits gaz sont mis en contact intime avec un polyol liquide miscible à l'eau ou avec un mélange dudit polyol avec de l'eau, un passage desdits gaz de combustion sortant dudit réacteur (1) à travers un devésiculeur (2), puis à travers un réacteur supplémentaire (3), dans lequel lesdits gaz de combustion sont mis en contact intime avec de l'eau, ledit réacteur (1) et ledit réacteur supplémentaire (3) étant tous deux un laveur Venturi ou un laveur à inertie.

2. Procédé selon la revendication 1, dans lequel ledit polyol liquide miscible à l'eau est un glycol, de préférence du propylène glycol.

3. Installation pour la réduction des matières particulaires contenues dans des gaz de combustion émis lors de processus de combustion, comprenant un réacteur (1) apte à mettre lesdits gaz de combustion en contact intime avec un polyol liquide miscible à l'eau ou un mélange dudit polyol avec de l'eau, un réacteur supplémentaire (3) apte à mettre les gaz de combustion sortant dudit réacteur (1) en contact intime avec de l'eau, et un devésiculeur (2) disposé entre ledit réacteur (1) et ledit réacteur supplémentaire (3), ledit réacteur (1) et ledit réacteur supplémentaire (3) étant constitués de laveurs, **caractérisée en ce que** lesdits laveurs sont des laveurs Venturi ou des laveurs à inertie ou un laveur comprenant :
- un corps tubulaire (11), ayant une paroi intérieure cylindrique (11a), lequel corps tubulaire est pourvu d'une enveloppe de refroidissement (14) et est fermé à ses extrémités opposées par des plaques d'extrémité (12, 13) et est pourvu d'au moins une ouverture d'entrée (15) pour l'admission des gaz de combustion et d'au moins une ouverture d'évacuation (16),
- un arbre coaxial (17) s'étendant longitudinalement et supporté en rotation à l'intérieur du corps tubulaire (11),
- au moins un groupe de pales (18) fixé radialement sur ledit arbre (17),
- au moins un corps rotatif (19) de forme purement conique fixé sur ledit arbre (17) de façon coaxiale à celui-ci, dont la base est tournée vers l'ouverture d'évacuation et dont le diamètre est presque égal au diamètre de la paroi intérieure du corps tubulaire cylindrique (11), avec lequel il forme un passage annulaire,
- des moyens (10) pour l'admission de liquide dans le corps tubulaire (11) en amont dudit au moins un corps rotatif (19) de forme purement conique, et
- de façon optionnelle, une ou plusieurs buses (20) sur la paroi intérieure du corps tubulaire cylindrique (11), pour l'admission d'un liquide par pulvérisation.
